# EUROPÄISCHE PATENTSCHRIFT

(11) **EP 3 450 933 B1**
(45) Veröffentlichungstag und Bekanntmachung des Hinweises auf die Patenterteilung: **06.07.2022**
(21) Anmeldenummer: 17188655.9
(22) Anmeldetag: 30.08.2017
(51) Int. Cl.: G01F 23/296, G01F 23/80, G01F 25/10

(54) **VERFAHREN ZUM BETREIBEN EINES GRENZSTANDSENSORS**
METHOD OF OPERATING A FLUID LEVEL THRESHOLD SENSOR
PROCÉDÉ DE FONCTIONNEMENT D'UN CAPTEUR DE NIVEAU LIMITE

(43) Veröffentlichungstag der Anmeldung: 06.03.2019
(73) Patentinhaber: VEGA Grieshaber KG, 77709 Wolfach (DE)
(72) Erfinder: ALLGAIER, Volker, 77716 Haslach i. K. (DE); FEHRENBACH, Dominik, 77716 Haslach (DE)
(74) Vertreter: Patentanwälte Bauer Vorberg Kayser

(56) Entgegenhaltungen:
- DE-A1-102012 102 589
- US-A- 5 895 848
- US-A1- 2003 140 695

## Beschreibung

Die vorliegende Erfindung betrifft ein Verfahren zum Betreiben eines Grenzstandsensors, gemäß dem Oberbegriff des Patentanspruchs 1.

Aus dem Stand der Technik sind Grenzstandsensoren, insbesondere Vibrations-Grenzstandsensoren und Impedanz-Grenzstandsensoren sowie Verfahren zum Betreiben der selben bekannt.

Typische Anwendungen die für Erfassung einer vordefinierten Füllhöhe (Grenzstand) sind beispielsweise Prozesstanks, Lagertanks, Silos oder Rohrleitungen in der Prozessindustrie. Grenzstandsensoren werden vorzugsweise in unterschiedlichsten Flüssigkeiten sowie granulierten und pulverförmigen Schüttgütern eingesetzt. Je nach Eigenschaft des Füllguts sowie den individuellen Prozessbedingungen kommen unterschiedliche Grenzstandsensoren zum Einsatz. Bekannt sind beispielsweise Impedanz-Grenzstandsensoren, Vibrations-Grenzstandsensoren sowie Sensoren, die nach einem kapazitiven Messprinzip arbeiten.

Aus dem Stand der Technik sind Impedanz-Grenzstandsensoren bekannt, bei denen eine durch den Sensor gebildete Kapazität in einem Schwingkreis als frequenzbestimmendes Element angeordnet ist. Beispielsweise kann die Sensorkapazität mit einer diskreten Induktivität einen Serienschwingkreis bilden. Befindet sich Messmedium im Bereich der Kapazität, so verändert sich deren Kapazität und damit eine Impedanz des Schwingkreises. Die Impedanz kann ermittelt und zur Erzeugung eines Grenzstandmesssignals verwendet werden.

Konkret wird die über eine Frequenz variierende komplexwertige Impedanz des Schwingkreises betragsmäßig auf ihr Minimum, das heißt das Amplitudenminimum, sowie auf die Frequenz, bei der dieses Minimum auftritt, untersucht. Zur Generierung des Grenzstandmesssignals wird die Frequenzverschiebung sowie eine Impedanzdifferenz zwischen einem unbedeckten und einem mit Medium bedeckten Zustand ausgewertet.

Eine Ermittlung dieses Minimums erfolgt durch eine Anregung des Schwingkreises auf sämtlichen möglichen Frequenzen mittels eines Frequenzsweeps über den gesamten Frequenzbereich.

Aus dem Stand der Technik sind ferner Vibrations-Grenzstandsensoren bekannt, wobei der Vibrations-Grenzstandsensor eine über einen Antrieb zu einer Schwingung anregbare Membran aufweist, mittels der ein an der Membran angeordneter mechanischer Schwinger zu einer Schwingung anregbar ist. Abhängig von einem Bedeckungsstand des mechanischen Schwingers mit einem Füllgut sowie abhängig von der Viskosität dieses Füllgutes schwingt der mechanische Schwinger mit einer charakteristischen Frequenz, die von dem Vibrationssensor detektiert werden und in ein Messsignal umgewandelt werden kann.

Solche Vibrations-Grenzstandsensoren für Flüssigkeiten und Schüttgüter arbeiten nach dem Prinzip der Resonanzfrequenzverschiebung. Der Vibrations-Grenzstandsensor schwingt je nach Bedeckungszustand, Dichte und Temperatur des Mediums mit einer anderen Resonanzfrequenz und Amplitude. Die Amplitude der Resonanzfrequenz ist dabei von der Viskosität des Mediums abhängig. Die Frequenzverschiebung ist von der Dichte, Temperatur und Viskosität des Mediums abhängig.

Aus dem Stand der Technik sind zwei unterschiedliche Arten der Schwingungsanregung für Vibrations-Grenzstandsensoren bekannt, die unter den Stichwörtern Schwingkreisanregung und Systemanalyse bekannt sind.

Bei der Schwingkreisanregung ist der Antrieb des Vibrations-Grenzstandsensors Teil eines geschlossenen analogen oder digitalen Schwingkreises. Der Vibrations-Grenzstandsensor wird so permanent auf seiner mechanischen Resonanzfrequenz gehalten. Die Schwingungsfrequenz des Schwingkreises kann ausgewertet und zur Messwertbestimmung verwendet werden.

Bei der Systemanalyse wird der Vibrations-Grenzstandsensor mit einer beliebigen Frequenz angeregt. Dabei kann es sich um einen Frequenzsweep, eine Festfrequenz oder einen Impuls handeln. Nach der Anregung wird in das Schwingsystem "hineingehört" und die Frequenz des Ausschwingens, die der mechanischen Resonanzfrequenz entspricht, ermittelt. Erhält man kein Signal zurück, wird davon ausgegangen, dass sich der Vibrations-Grenzstandsensor im bedeckten Zustand befindet.

Bei der Anregung des Systems mit einer Festfrequenz muss diese der Resonanzfrequenz möglichst gut entsprechen, damit eine ausreichende Amplitude für die Ermittlung der Frequenz des Ausschwingens erreicht wird. Wenn die Resonanzfrequenz wechselt, bspw. durch einen Wechsel zwischen einem Bedeck- und einem Unbedecktzustand des Vibrations-Grenzstandsensors kann es vorkommen, dass diese Form der Systemanalyse nicht funktioniert, da in dieser Situation keine ausreichende Anregung der Resonanzfrequenz erfolgt.

Bei der Anregung mit einem Rechteckimpuls bringt man bei Systemen mit hoher Güte zu wenig Energie in das System, um damit eine Eigenfrequenzanalyse betreiben zu können. Da man bei den hier eingesetzten Sensoren typischerweise energetisch oder wegen EX-Beschaltungen begrenzt ist, kann man die Höhe eines Rechteckimpulses nicht beliebig wählen. Dadurch bekommt man bei einer solchen Impulsantwort zu wenig Signal zurück.

Um den Vibrations-Grenzstandsensor bei der Anregung mit einem Frequenzsweep sicher auf seiner Resonanzfrequenz anzuregen wird im Stand der Technik ein durchgehender Frequenzsweep über den gesamten Frequenzbereich durchgeführt. Bei einem Frequenzsweep mit geringer Schrittweite, kann man sich sicher sein, dass die Resonanzfrequenz angeregt wurde und anschließend ein ausreichend "starkes" Signal bei der Detektion vorliegt. Als Frequenzbereich wird im Stand der Technik der gesamte Frequenzbereich von einer Resonanzfrequenz bei Bedeckung des Sensors mit einem Medium mit der höchsten erlaubten Viskosität bis zu einer Resonanzfrequenz des Systems in Luft verwendet. Bei einer Frequenz von 58% oder weniger der Luftfrequenz des Systems wird von einer Blockierung des mechanischen Schwingers ausgegangen und eine Störungsmeldung ausgegeben. Bei einer Frequenz von 104% oder mehr der Luftfrequenz des Systems wird ebenfalls eine Störungsmeldung ausgegeben. Die Luftfrequenz des Systems ist diejenige Frequenz, bei der der mechanische Schwinger unter Normalbedingungen in Luft schwingt.

Je höher der Bedeckungszustand des Vibrations-Grenzstandsensors und die Viskosität des Mediums, umso kürzer schwingt der Vibrationsgrenzschalter aus. Bei Medien hoher Viskosität kann das dazu führen, dass eine Schwingung des Systems bereits abgeklungen ist, wenn der Frequenzsweep beendet ist.

Beim Verfahren der Systemanalyse kann es dazu führen, dass beispielsweise ein verklemmen oder defekt der Gabel zu einer falschen Meldung des Vibrations-Grenzstandsensor führt, weil die Schwingung der Mechanik bereits abgeklungen ist, bis mit dem Detektieren begonnen wird. Dies ist der Fall bei hohen Viskositäten. Da man aber nun davon ausgeht, dass es sich um einen bedeckten Zustand mit einer hohen Viskosität handelt (siehe auch Beschreibung oben), kann bei einer blockierten Gabel (bspw. durch einen Stein im Prozess) die nicht mehr von Medium bedeckt ist, nicht mehr unterschieden werden zwischen den Zuständen "blockiert" und "bedeckt mit Medium mit hoher Viskosität".

Weiterer Stand der Technik ist aus der DE 10 2012 102 589 A1, aus der US 5 895 848 A und der US 2003/0140695 A1 (bzw. DE 102 03 461 A1) bekannt.

Es ist die Aufgabe der vorliegenden Erfindung ein Verfahren zum Betreiben eines Grenzstandsensors zur Verfügung zu stellen, bei dem eine Ermittlung der Resonanzfrequenz schnell und mit hoher Wahrscheinlichkeit erfolgreich ist.

Diese Aufgabe wird gelöst durch eine Verfahren mit den Merkmalen des Patentanspruchs 1. Vorteilhafte Weiterbildungen sind Gegenstand abhängiger Patentansprüche.

Ein erfindungsgemäßes Verfahren zum Betreiben eines Grenzstandsensors bei dem der Grenzstandsensor zur Bestimmung einer Resonanzfrequenz eines Schwingungssystems eingesetzt wird, wobei bei dem das Schwingungssystem in einem Frequenzbereich zwischen einer unteren Grenzfrequenz und einer oberen Grenzfrequenz angeregt und anschließend eine Frequenzantwort detektiert wird, zeichnet sich dadurch aus, dass der Frequenzbereich in eine Mehrzahl von Teilbereichen unterteilt wird und
a) bei unbekannter Resonanzfrequenz das Schwingungssystem sequenziell jeweils in aufeinanderfolgenden Teilbereichen angeregt und nach jedem Teilbereich die Frequenzantwort detektiert wird,
b) bei bekannter Resonanzfrequenz das Schwingungssystem nur in dem Teilbereich, in dem die Resonanzfrequenz liegt, angeregt und anschließend die Frequenzantwort detektiert wird.

Ein erfindungsgemäßes Verfahren zum Betreiben eines Grenzstandsensors hat im Fall eines Vibrations-Grenzstandsensors den Vorteil, dass durch die Unterteilung des Frequenzbereichs in mehrere Teilbereiche bei unbekannter Resonanzfrequenz auch bei einer vollständigen Bedeckung des Vibrations-Grenzstandsensors mit einem Medium hoher Viskosität zuverlässig eine Detektion der Resonanzfrequenz, wenn sie in diesem Teilbereich liegt, möglich ist. Dieser Sachverhalt ergibt sich daraus, dass man in jedem Teilbereich mehr Energie der korrekten Frequenz einkoppelt und somit die mechanische Schwingung der Schwinggabel mit mehr Amplitude anregen kann. Somit erhält man auch mehr Amplitude zurück. Die Teilbereiche sind hierfür idealerweise so ausgewählt, dass eine Frequenzantwort des Schwingungssystems auch bei maximaler Bedeckung des Vibrations-Grenzstandsensors mit einem Medium der größten noch zulässigen Viskosität, das heißt bei maximaler Dämpfung des Schwingungssignals, möglich ist. Ein weiterer Vorteil des oben beschriebenen Verfahrens liegt darin, dass bei bekannter Resonanzfrequenz das Schwingungssystem nur in dem Teilbereich angeregt werden muss, in dem die Resonanzfrequenz liegt, sodass hierdurch eine deutlich schnellere Ermittlung der Resonanzfrequenz möglich ist. Ferner kann durch das erfindungsgemäße Verfahren im korrekten Frequenzbereich, d. h. in dem Teilbereich in dem die Resonanzfrequenz liegt, mehr Energie eingekoppelt werden, sodass die Resonanzfrequenz mit höherer Amplitude angeregt wird und damit auch ein Signal größerer Amplitude empfangen werden kann.

Sowohl bei Vibrations-Grenzstandsensoren als auch bei Impedanz-Grenzstandsensoren kann die Resonanzfrequenz mit dem erfindungsgemäßen Verfahren schneller aufgefunden werden als dies im Stand der Technik der Fall ist.

Um eine zuverlässige Detektion der Frequenzantwort zu gewährleisten ist bei Vibrations-Grenzstandsensoren eine minimale Empfangs-Amplitude von etwa 10% der maximalen Empfangsamplitude notwendig. Alternativ kann eine minimale Signal to Noise Ratio (SNR), das Verhältnis von Nutzsignal zu Rauschen, bestimmt werden, wobei die minimale SNR wenigstens 3 dB, vorzugsweise wenigstens 5 dB weiter vorzugsweise größer als 10 dB ist. Die Teilbereiche zur Anregung des Schwingungssystems sind daher idealerweise so zu wählen, dass bei maximaler Dämpfung auch am Ende eines Frequenzsweeps über den Teilbereich noch eine ausreichende Amplitude für die Startfrequenz des Frequenzsweeps in dem Teilbereich vorliegt, d. h. die minimale Empfangsfrequenz erreicht wird, oder eine SNR von 3 dB nicht unterschritten wird.

Versuche haben ergeben, dass bei einem üblichen Vibrations-Grenzstandsensor eine Unterteilung des Frequenzbereichs in vier Teilbereiche gute Ergebnisse liefert. Liegen mögliche Frequenzantworten beispielsweise in einem Frequenzbereich zwischen 800 Hz und 1400 Hz kann der Frequenzbereich in vier gleich große Teilbereiche von je 150 Hz unterteilt werden.

In einer alternativen Ausgestaltung des Verfahrens kann der Frequenzbereich bei unbekannter Resonanzfrequenz in vier Teilbereiche unterteilt werden und bei bekannter Resonanzfrequenz der Teilbereich, in dem die Resonanzfrequenz liegt dynamisch angepasst werden. Auf diese Weise kann der Teilbereich, in dem die Resonanzfrequenz liegt bei einer Verschiebung der Resonanzfrequenz dieser nachgeführt und somit jeweils eine Ermittlung der Resonanzfrequenz in deutlich kürzerer Zeit erreicht werden. Der Teilbereich, in dem die Resonanzfrequenz liegt, kann beispielsweise ausgehend von einer zuletzt detektierten Resonanzfrequenz von 50 Hz unter der zuletzt detektierten Resonanzfrequenz bis 50 Hz über der zuletzt detektierten Resonanzfrequenz gelegt werden. Alternativ kann der Teilbereich auch 75 Hz oder 100 Hz unterhalb bzw. oberhalb der zuletzt detektierten Resonanzfrequenz enden.

Durch ein entsprechendes Setzen der Grenzfrequenzen des Teilbereichs kann einerseits eine schnelle Ermittlung der Resonanzfrequenz innerhalb des Teilbereichs sichergestellt werden und andererseits auch gewährleistet werden, dass die Resonanzfrequenz auch bei einer Verschiebung der Resonanzfrequenz weiterhin in dem Teilbereich, in dem das Schwingungssystem angeregt wird liegt und damit detektiert wird.

In einem Fall, in dem die Resonanzfrequenz in dem vorherigen Teilbereich, in dem die zuletzt detektierte Resonanzfrequenz lag, nicht detektiert wird, kann zunächst ein erster an der vorherigen Teilbereich unmittelbar angrenzender Teilbereich mit einem Frequenzsweep angeregt und die Frequenzantwort detektiert werden. Falls die Resonanzfrequenz dort nicht liegt, kann ein zweiter an den vorherigen Teilbereich angrenzender Teilbereich angeregt und dort die Frequenzantwort detektiert werden. Vorteilhafterweise wird hierfür zunächst der Teilbereich gewählt, der näher an der Schaltschwelle liegt, sodass eine Änderung des Schaltzustandes möglichst schnell detektiert werden kann. Auf diese Weise kann auch bei einer stärkeren Verschiebung der Resonanzfrequenz ein rasches Nachführen des Messsignals erreicht werden.

Für den Fall, dass die Resonanzfrequenz auch in keinem der angrenzenden Teilbereiche detektiert wird, ist das Verfahren wie bei unbekannter Resonanzfrequenz zu durchlaufen.

Idealerweise werden die einzelnen Teilbereiche jeweils mit einem Frequenzsweep von einem oberen Ende des Teilbereichs zu einem unteren Ende des Teilbereichs angeregt. Unter einem Frequenzsweep wird in der vorliegenden Anmeldung eine sequenzielle Anregung einer Vielzahl von Frequenzen innerhalb eines Frequenzbereichs bei vorgegebener Schrittweite verstanden. Die vorgegebene Schrittweite kann zwischen 1 Hz und 4 Hz, insbesondere 1 Hz, 2 Hz, 3 Hz oder 4 Hz betragen. Frequenzsweeps können grundsätzlich aufsteigend oder absteigend durchgeführt werden, wobei gemäß der vorliegenden Anmeldung absteigende Frequenzsweeps, das heißt eine sequenzielle Anregung des Schwingungssystems mit inkrementell absteigenden Frequenzen, beispielsweise in 4 Hz-Schritten, bevorzugt werden.

Da eine Dämpfung der angeregten Schwingungen mit abnehmender Frequenz zunimmt kann auf diese Weise sichergestellt werden, dass auch für die niedrigeren Frequenzen innerhalb eines Teilbereichs eine ausreichende Schwingungsamplitude zur Systemanalyse vorliegt.

Bei unbekannter Resonanzfrequenz können außerdem die einzelnen Teilbereiche in absteigender Reihenfolge, das heißt von hohen zu niedrigen Frequenzen, durchlaufen werden.

Für den Fall, dass die Resonanzfrequenz aus einer vorherigen Messung bekannt ist und falls die Resonanzfrequenz in dem vorherigen Teilbereich, in dem die zuletzt detektierte Resonanzfrequenz lag nicht detektiert wird, können die obere Grenze und die untere Grenze des Teilbereichs beispielsweise um jeweils 50 Hz nach oben bzw. unten verschoben, das heißt der Teilbereich vergrößert, werden. Für den Fall, dass die Resonanzfrequenz auch in dem vergrößerten Teilbereich nicht liegt, kann das Verfahren wie bei unbekannter Resonanzfrequenz durchlaufen werden. Es kann bei der Vergrößerung des Teilbereiches auch jeder andere geeignete Frequenzwert verwendet werden.

Die vorliegende Erfindung wird nachfolgend unter Bezugnahme auf die beigefügten Figuren eingehend erläutert. Falls nicht anders angegeben kennzeichnen identische Bezugszeichen gleiche oder einander entsprechende Komponenten.

Es zeigen:
Figur 1a einen typischen Frequenzbereich, in dem die Resonanzfrequenz eines Vibrations-Grenzstandsensors der vorliegenden Anmeldung liegen kann,
Figur 1b Frequenzantworten, wie sie bei einer Anregung gemäß Figur 1a erhalten werden können,
Figur 2 ein Ablaufdiagramm einer ersten Variante des Verfahrens der vorliegenden Anmeldung,
Figur 3a eine Variante des Verfahrens gemäß der vorliegenden Anmeldung,
Figur 3b Frequenzantworten bei einer Anregung gemäß Figur 2a,
Figur 4 eine Variante des Verfahrens gemäß Figur 2,
Figur 5 zeigt den Betrag der komplexwertigen Impedanz eines Impedanz-Grenzstandsensors abhängig von der Messfrequenz.
Figur 6a die Anregung eines Vibrations-Grenzstandsensors gemäß dem Stand der Technik und
Figur 6b die Frequenzantwort bei einer Frequenzanregung gemäß Figur 6a.

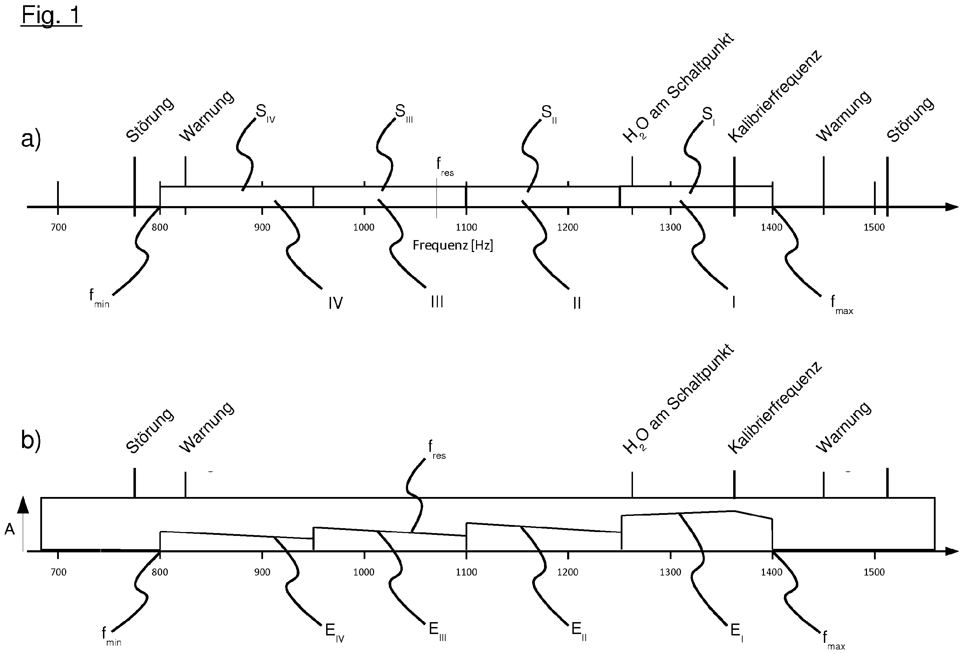

In Figur 1 ist ein typischer Frequenzbereich gezeigt, in dem Vibrations-Grenzstandsensoren, wie sie aus dem Stand der Technik bekannt sind, betrieben werden.

Typische Frequenzbereiche liegen, wie in Figur 1a dargestellt, zwischen einer unteren Grenzfrequenz von fₘᵢₙ von 800 Hz und einer oberen Grenzfrequenz fₘₐₓ von 1400 Hz, wobei eine Resonanzfrequenz fᵣₑₛ eines mechanischen Schwingers des Vibrations-Grenzstandsensor von einem Bedeckungszustand des mechanischen Schwingers mit dem Füllgut sowie von einer Viskosität des Füllguts abgängig ist. Eine Ermittlung der Resonanzfrequenz fᵣₑₛ erfolgt im vorliegenden Ausführungsbeispiel gemäß dem Prinzip der sogenannten Systemanalyse, wobei gemäß der vorliegenden Anmeldung das Schwingungssystem des Vibrations-Grenzstandsensors in vier Teilbereichen, I, II, III, IV, in die der Frequenzbereich zwischen der unteren Grenzfrequenz fₘᵢₙ und der oberen Grenzfrequenz fₘₐₓ unterteilt ist mit sogenannten Frequenzsweeps, das heißt der sequenziellen Anregung mit einer Mehrzahl von aufeinander folgenden Frequenzen innerhalb eines Teilbereichs, erfolgt.

Im vorliegenden Ausführungsbeispiel werden bei unbekannter Resonanzfrequenz fᵣₑₛ des Schwingungssystems nacheinander vier Frequenzsweeps S_{I}, S_{II}, S_{III}, S_{IV} durchgeführt, wobei nach jedem Frequenzsweep S_{I}, S_{II}, S_{III}, S_{IV} eine Frequenzantwort E_{I}, E_{II}, E_{III}, E_{IV} des Schwingungssystems detektiert wird. Für den Fall, dass die Resonanzfrequenz fᵣₑₛ im Bereich eines Frequenzsweeps S_{I}, S_{II}, S_{III}, S_{IV} liegt, wird nach Abschluss des Frequenzsweeps S_{I}, S_{II}, S_{III}, S_{IV} eine Frequenzantwort E_{I}, E_{II}, E_{III}, E_{IV} des Schwingungssystems auf dieser Resonanzfrequenz fᵣₑₛ detektiert sodass die Resonanzfrequenz fᵣₑₛ ermittelt werden kann.

Im vorliegenden Ausführungsbeispiel werden die Frequenzsweeps S_{I}, S_{II}, S_{III}, S_{IV} jeweils von der höchsten zur niedrigsten Frequenz innerhalb eines Teilbereichs I, II, III, IV durchgeführt, wobei die vier Teilbereiche I, II, III, IV mit identischer Größe von jeweils 150 Hz ausgeführt sind. Die Teilbereiche werden ebenfalls in absteigender Reihenfolge durchlaufen.

In der in Figur 1a gezeigten Darstellung sind zusätzlich zu den Teilbereichen I, II, III, IV auch weitere charakteristische Frequenzen eingezeichnet. Eingezeichnet ist zum Beispiel die sogenannte Kalibrierfrequenz von 1375 Hz, die einer Schwingungsfrequenz des mechanischen Schwingungssystems in Luft entspricht. Ferner ist eine Frequenz von 1260 Hz eingezeichnet, was der Resonanzfrequenz des mechanischen Schwingungssystems am Schaltpunkt, d. h. bei einem Wechsel der Bedeckung des Vibrations-Grenzstandsensors von Luft zu Wasser entspricht. Oberhalb der Kalibrierfrequenz wird bei einer Frequenz von 1450 Hz eine Warnung ausgegeben und bei Erreichen einer Frequenz von 1520 Hz eine Störung angenommen. Am unteren Ende des Frequenzbereichs wird eine Warnung bei Erreichen einer Frequenz von 820 Hz und eine Störung bei unterschreiten einer Frequenz von 780 Hz ausgegeben. Da die oben genannten Frequenzen aufgrund von Fertigungstoleranzen schwanken können, werden diese häufig auch relativ zur Kalibrierfrequenz angegeben.

In Figur 1b ist die mögliche maximale Amplitude einer Frequenzantwort für die jeweiligen Resonanzfrequenzen bei einer Anregung mit absteigenden Frequenzsweeps S_{I}, S_{II}, S_{III}, S_{IV} gemäß Figur 1a dargestellt. Aus der in Figur 1b gezeigten Darstellung ist ersichtlich, dass bei einer Anregung gemäß Figur 1a für sämtliche mögliche Resonanzfrequenzen fᵣₑₛ in dem Frequenzbereich zwischen der unteren Grenzfrequenz fₘᵢₙ und der oberen Grenzfrequenz fₘₐₓ eine ausreichende Amplitude A für die Systemanalyse und damit die Ermittlung der Resonanzfrequenz fᵣₑₛ zur Verfügung steht. Die einzelnen Empfangssignale E₁, E₂, E₃, E₄ sind jeweils ausreichend groß, sodass auch unter schlechten Messbedingungen eine hinreichend sichere Detektion der Resonanzfrequenz fᵣₑₛ möglich ist.

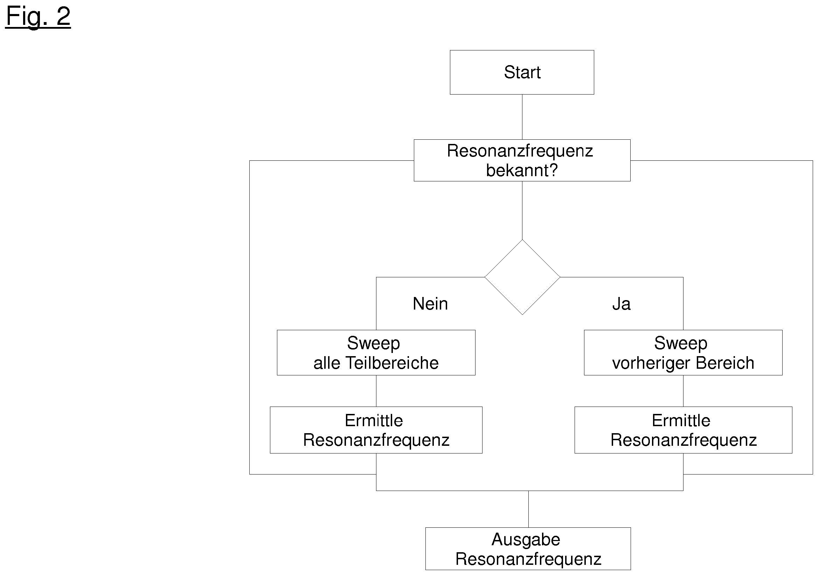

Das Verfahren zum Betreiben des Vibrationsgrenzschalters ist in Figur 2 dargestellt. Ist eine Resonanzfrequenz fᵣₑₛ nicht bekannt, so werden sämtliche Teilbereiche I, II, III, IV mit einem Frequenzsweep S_{I}, S_{II}, S_{III}, S_{IV} angeregt und nach jedem Frequenzsweep S_{I}, S_{II}, S_{III}, S_{IV} eine Schwingungsfrequenz des Schwingungssystems des Vibrations-Grenzstandsensors ermittelt. Auf diese Weise kann, wenn der Frequenzbereich zwischen der unteren Grenzfrequenz fₘᵢₙ und der oberen Grenzfrequenz fₘₐₓ in vier Teilbereiche I, II, III, IV unterteilt wird zuverlässig eine Ermittlung der Resonanzfrequenz fᵣₑₛ erfolgen. Ist die Resonanzfrequenz fᵣₑₛ des Schwingungssystems aus einer ersten erfolgten Messung bekannt, so kann in einer darauf folgenden Messung ein Frequenzsweep lediglich in dem Teilbereich stattfinden, in dem die zuvor ermittelte Resonanzfrequenz fᵣₑₛ₋₁ lag. Solange die Resonanzfrequenz fᵣₑₛ in diesem Teilbereich liegt, muss ein Frequenzsweep S_{I}, S_{II}, S_{III}, S_{IV} nur in diesem Teilbereich I, II, III, IV durchgeführt werden. Die benötigte Messzeit verkürzt sich damit deutlich. Kann die Resonanzfrequenz fᵣₑₛ in dem entsprechenden Teilbereich I, II, III, IV in dem die zuvor ermittelte Resonanzfrequenz fᵣₑₛ₋₁ lag, nicht mehr ermittelt werden, so kann entweder direkt ein Sweep über sämtliche Teilbereiche, wie oben beschrieben, durchgeführt werden, oder alternativ kann zunächst ein Frequenzsweep den unmittelbar an den vorherigen Teilbereich angrenzenden Teilbereichen durchgeführt und nur wenn dort ebenfalls keine Ermittlung der Resonanzfrequenz fᵣₑₛ möglich ist, ein Sweep über sämtliche Teilbereiche I, II, III, IV durchgeführt werden.

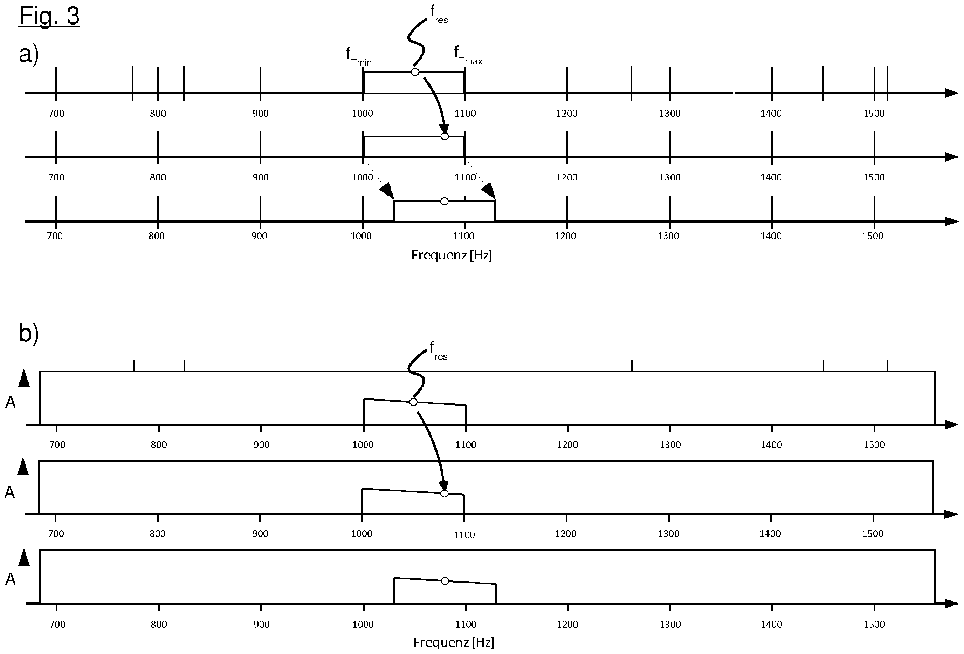

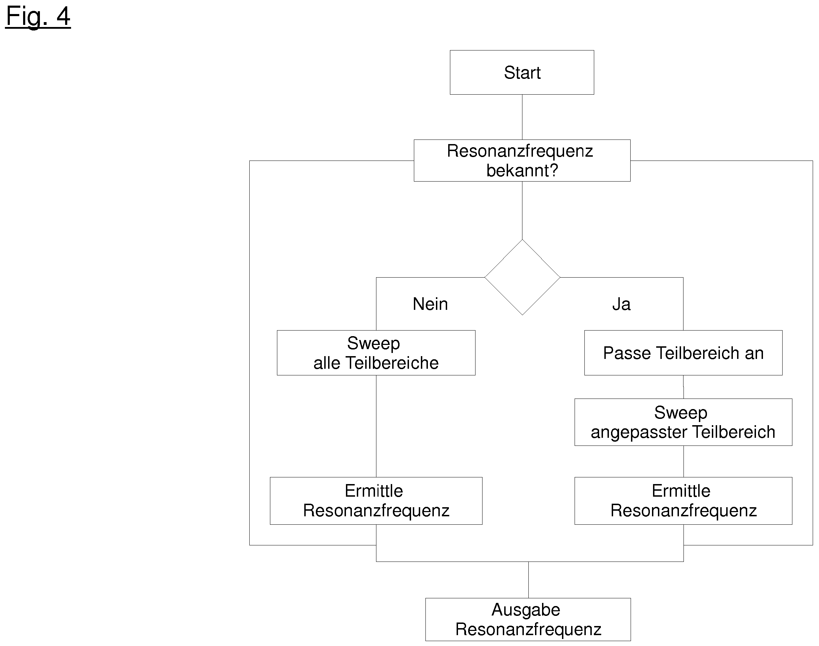

In den Figuren 3a und 3b sowie Figur 4 ist ein alternatives Verfahren zum Betreiben eines Vibrations-Grenzstandsensors beschrieben.

In Figur 3a ist der in Figur 1a gezeigte Frequenzbereich zwischen der unteren Grenzfrequenz fₘᵢₙ von 800 Hz und der oberen Grenzfrequenz fₘₐₓ von 1400 Hz nochmals dargestellt, wobei in den drei Zeilen der Figur 3a das Vorgehen bei einer Verschiebung der Resonanzfrequenz fᵣₑₛ von 1050 Hz in der ersten Zeile zu einem Wert von 1075 Hz in der zweiten Zeile gezeigt ist. Bei einer Verschiebung der Resonanzfrequenz fᵣₑₛ wird bei diesem alternativen Verfahren, nämlich der Teilbereich, in dem ein Frequenzsweep durchgeführt wird dynamisch an die jeweils zuvor detektierte Resonanzfrequenz fᵣₑₛ₋₁ angepasst. Verschiebt sich diese Resonanzfrequenz wie in Figur 3a dargestellt von 1050 Hz auf 1075 Hz , so werden die untere Grenzfrequenz f_{Tmin} des Teilbereichs und die obere Grenzfrequenz f_{Tmax} des Teilbereichs von f_{Tmin} = 1000 Hz und f_{Tmax} = 1100 Hz auf f_{Tmin} = 1025 Hz und f_{Tmax} = 1125 Hz angepasst, sodass die detektierte Resonanzfrequenz fᵣₑₛ wieder mittig in dem Teilbereich, der mit einem Frequenzsweep angeregt wird, liegt. Auf diese Weise kann eine dynamische Anpassung der Grenzen des Teilbereichs, in dem die Resonanzfrequenz fᵣₑₛ liegt, erfolgen, sodass Frequenzsweeps über mehrere Teilbereiche hinweg, weil die Resonanzfrequenz fᵣₑₛ verloren wurde, das heißt nicht mehr bekannt ist, vermieden werden können. In Figur 3b ist die jeweilige Frequenzantwort für die in dem angeregten Teilbereich möglichen Resonanzfrequenzen gezeigt. Durch das entsprechende Vorgehen kann vermieden werden, dass die Resonanzfrequenz verloren wird, sodass fast ausschließlich ein Frequenzbereich von - im vorliegenden Fall - 100 Hz gesweept werden muss.

Ein entsprechender Ablauf ist in Figur 4 gezeigt. Gemäß dem dort dargestellten Vorgehen wird bei unbekannter Resonanzfrequenz fᵣₑₛ ein Sweep über sämtliche Teilbereiche wie in Figur 1a dargestellt, durchgeführt, und die aktuelle Resonanzfrequenz fᵣₑₛ ermittelt. Sobald die Resonanzfrequenz bekannt ist wird eine dynamische Anpassung des Teilbereichs durchgeführt und ein Frequenzsweep lediglich in dem angepassten Teilbereich durchgeführt. Wird bei dem vorliegenden Vorgehen aufgrund einer zu schnellen Änderung der Resonanzfrequenz fᵣₑₛ diese verloren, das heißt dass die Resonanzfrequenz fᵣₑₛ nicht mehr im gesweepten Teilbereich liegt, kann diese entweder dynamisch vergößert, das hießt die untere Grenzfrequenz des Teilbereichs fₚₘᵢₙ nach unten verschoben und die obere Grenze des Teilbereichs fₚₘₐₓ nach oben verschoben werden, beispielsweise um 100 Hz oder direkt ein Sweep über sämtliche Teilbereiche gemäß dem in Bezug auf die Figuren 1 und 2 beschriebenen Verfahren durchgeführt werden.

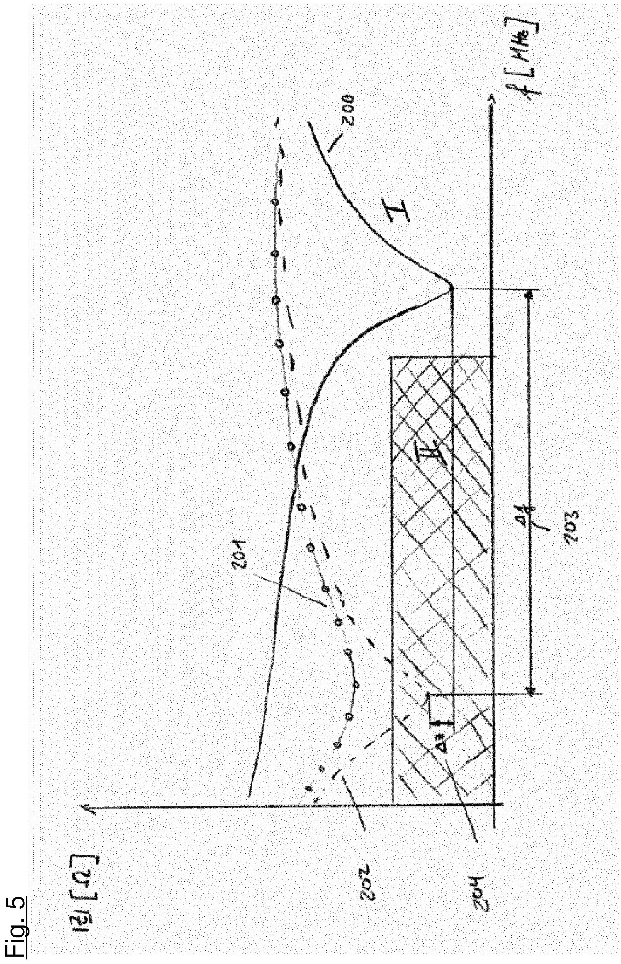

Figur 5 zeigt den Betrag der komplexwertigen Impedanz (|Z|) dargestellt über der Messfrequenz (f). Die Impedanzmessung erfolgt idealerweise in einem Frequenzbereich zwischen 100 MHz und 200 MHz, wobei jeweils das Minimum der ermittelten Resonanzkurve ausschlaggebend ist.

Figur 5 zeigt das Impedanzverhalten eines sauberen, unbedeckten Impedanz-Grenzstandsensors in Kennlinie 200, eines mit Messmedium verschmutzen Sensors in Kennlinie 201 und eines vollständig bedeckten Sensors in Kennlinie 202. Es werden ausschließlich die Minima der Resonanzkurven für die Auswertung betrachtet. Diese werden bezüglich Frequenzänderung Δf und Amplitudenänderung Δ |Z| ausgewertet. Befindet sich das Minimum der Resonanzkurve im Bereich I, so gibt die Auswerte- und Steuereinheit den Schaltbefehl leer aus. Befindet sich das Minimum jedoch im Bereich II, so wird der Vollzustand detektiert und ausgeben.

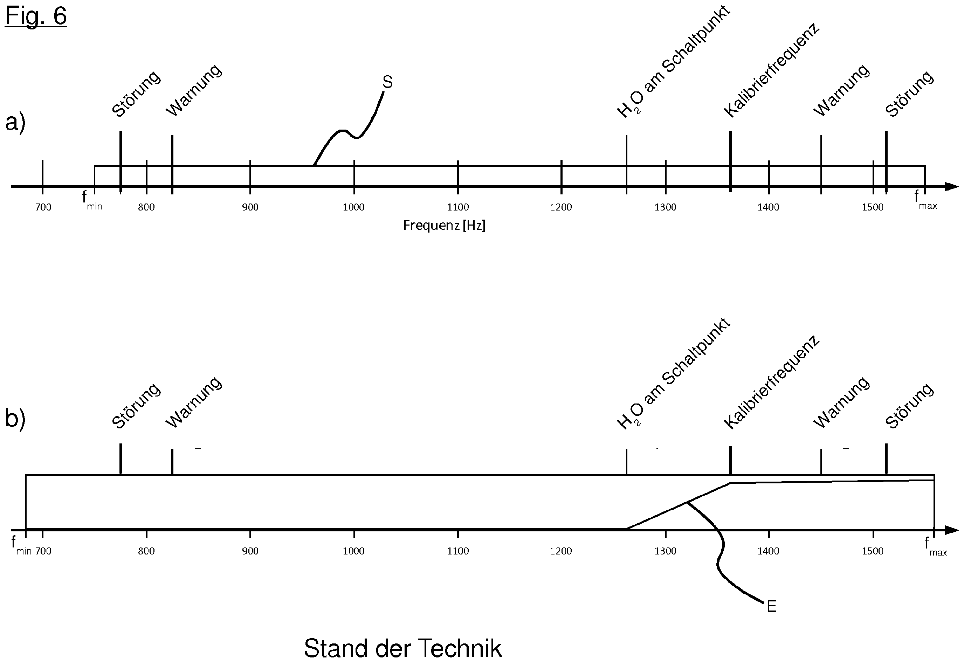

In Figur 6 ist ein Frequenzbereich zwischen einer unteren Grenzfrequenz fₘᵢₙ und einer oberen Grenzfrequenz fₘₐₓ, wie sie im Stand der Technik für Vibrations-Grenzstandsensoren verwendet werden gezeigt. Gemäß dem aus dem Stand der Technik üblichen Verfahren zum Betreiben von Vibrations-Grenzstandsensoren wird zur Ermittlung der Resonanzfrequenz fᵣₑₛ ein Frequenzsweep S über den gesamten Frequenzbereich von der unteren Grenzfrequenz fₘᵢₙ zur oberen Grenzfrequenz fₘₐₓ durchgeführt. Wie in Figur 6b dargestellt tritt unter diesen Umständen insbesondere bei Füllmedien mit einer höheren Viskosität als Wasser die Situation auf, dass eine Amplitude des Empfangssignals E, wie sie in Figur 1b dargestellt ist, nicht mehr detektierbar ist. Beispielsweise wäre eine Resonanzfrequenz bei 1080 Hz, wie das in Fig. 1 dargestellt ist, nicht detektierbar. Ist das der Fall, kann eine Unterscheidung zwischen einer Störung, beispielsweise wegen einem Blockieren des Vibrations-Grenzstandsensors oder einem Schaltsignal aufgrund einer Bedeckung des Vibrations-Grenzstandsensors mit dem hochviskosen Medium nicht mehr zuverlässig getroffen werden, sodass entsprechende Sensoren bei hochviskosen Medien nicht mehr einsetzbar sind.

## Patentansprüche

1. Verfahren zum Betreiben eines Grenzstand-sensors, bei dem der Grenzstandsensor zur Bestimmung einer Resonanzfrequenz (fᵣₑₛ) eines Schwingungssystems das Schwingungssystem in einem Frequenzbereich zwischen einer unteren Grenzfrequenz (fₘᵢₙ) und einer oberen Grenzfrequenz (fₘₐₓ) angeregt und anschließend eine Frequenzantwort (E) detektiert wird
**dadurch gekennzeichnet, dass**
der Frequenzbereich in eine Mehrzahl von Teilbereichen (I, II, III, IV,...,n) unterteilt wird und
a) bei unbekannter Resonanzfrequenz (fᵣₑₛ) das Schwingungssystem sequenziell jeweils in aufeinanderfolgenden Teilbereichen (I, II, III, IV,..., n) angeregt und die Frequenzantwort (E_{I}, E_{II}, E_{III}, E_{IV},..., Eₙ) nach jedem Teilbereich (I, II, III, IV,..., n) detektiert wird,
b) bei bekannter Resonanzfrequenz (fᵣₑₛ) das Schwingungssystem nur in dem Teilbereich (n), in dem die Resonanzfrequenz (fᵣₑₛ) liegt, angeregt und anschließend die Frequenzantwort (Eₙ) detektiert wird.

2. Verfahren gemäß Anspruch 1,
**dadurch gekennzeichnet, dass**
der Frequenzbereich in vier Teilbereiche (I, II, III, IV) unterteilt wird.

3. Verfahren gemäß Anspruch 1,
**dadurch gekennzeichnet, dass**
der Frequenzbereich im Fall a) in vier Teilbereiche (I, II, III, IV) unterteilt wird und im Fall b) der Teilbereich, in dem die Resonanzfrequenz (fᵣₑₛ) liegt dynamisch angepasst wird.

4. Verfahren gemäß Anspruch 3,
**dadurch gekennzeichnet, dass**
im Fall b) für Vibrations-Grenzstandsensoren der Teilbereich von 50 Hz unter der zuletzt detektierten Resonanzfrequenz (fᵣₑₛ₋₁) bis 50 Hz über der zuletzt detektierten Resonanzfrequenz (fᵣₑₛ₋₁) und für Impedanz-Grenzstandsensoren der Teilbereich von 10 MHz unter der zuletzt detektierten Resonanzfrequenz (fᵣₑₛ-1)bis 10 MHz über der zuletzt detektierten Resonanzfrequenz (fᵣₑₛ₋₁) festgelegt wird.

5. Verfahren gemäß einem der vorhergehenden Ansprüche,
**dadurch gekennzeichnet, dass**
in Fall b) falls die Resonanzfrequenz (fᵣₑₛ) in dem vorherigen Teilbereich, in dem die zuletzt detektierte Resonanzfrequenz (fᵣₑₛ₋₁) lag, nicht detektiert wird, zunächst ein erster an den vorherigen Teilbereich unmittelbar angrenzenden Teilbereiche angeregt und die Frequenzantwort detektiert und anschließend, falls die Resonanzfrequenz (fᵣₑₛ) dort nicht liegt, ein zweiter an den vorherigen Teilbereich angrenzender Teilbereich angeregt und die Frequenzantwort detektiert wird.

6. Verfahren gemäß Anspruch 5,
**dadurch gekennzeichnet, dass**
für den Fall, dass die Resonanzfrequenz (fᵣₑₛ) in keinem der angrenzenden Teilbereiche liegt, gemäß Fall a) verfahren wird.

7. Verfahren gemäß einem der vorhergehenden Ansprüche,
**dadurch gekennzeichnet, dass**
die einzelnen Teilbereiche jeweils mit einem Frequenzsweep von einem oberen Ende des Teilbereiches zu einem unteren Ende des Teilbereiches angeregt werden.

8. Verfahren gemäß einem der vorhergehenden Ansprüche,
**dadurch gekennzeichnet, dass**
in Fall a) die Teilbereiche in absteigender Reihenfolge durchlaufen werden.

9. Verfahren gemäß Anspruch 4,
**dadurch gekennzeichnet, dass**
in Fall b) falls die Resonanzfrequenz (fᵣₑₛ) in dem vorherigen Teilbereich, in dem die zuletzt detektierte Resonanzfrequenz (fᵣₑₛ₋₁) lag, nicht detektiert wird, die obere Grenze und die untere Grenze des Teilbereichs für Vibrations-Grenzstandsensoren um jeweils 50 Hz und für Impedanz-Grenzstandsensoren um jeweils 10 MHz nach oben bzw. unten vergrößert wird und für den Fall, dass die Resonanzfrequenz in dem vergrößerten Teilbereich nicht liegt, gemäß Fall a) verfahren wird.

## Claims

1. A method for operating a limit level sensor, in which the limit level sensor, in order to determine a resonance frequency (fᵣₑₛ) of a vibration system, excites the vibration system in a frequency range between a lower limit frequency (fₘᵢₙ) and an upper limit frequency (fmax), and a frequency response (E) is subsequently detected
**characterized in that**
the frequency range is divided into a plurality of partial ranges (I, II, III, IV, ..., n), and
a) in case of an unknown resonance frequency (fᵣₑₛ), the vibration system sequentially excites in each case in successive partial ranges (I, II, III, IV, ..., n), and the frequency response (E_{I}, E_{II}, E_{III}, E_{IV},..., Eₙ) is detected after each partial range (I, II, III, IV, ..., n),
b) in case of a known resonance frequency (fᵣₑₛ), the vibration system excites only in the partial range (n) in which the resonance frequency (fᵣₑₛ) is located, and the frequency response (Eₙ) is then detected.

2. The method according to claim 1,
**characterized in that**
the frequency range is divided into four partial ranges (I, II, III, IV).

3. The method according to claim 1,
**characterized in that**
in case a), the frequency range is divided into four partial ranges (I, II, III, IV), and in case b), the partial range in which the resonance frequency (fᵣₑₛ) is located is dynamically adjusted.

4. The method according to claim 3,
**characterized in that**
in case b), for vibration limit level sensors, the partial range is set to from 50 Hz below the most recently detected resonance frequency (fᵣₑₛ₋₁) to 50 Hz above the most recently detected resonance frequency (fᵣₑₛ₋₁) and, for impedance limit level sensors, the partial range is set to from 10 MHz below the most recently detected resonance frequency (fᵣₑₛ₋₁) to 10 MHz above the most recently detected resonance frequency (fᵣₑₛ₋₁).

5. The method according to any one of the preceding claims,
**characterized in that**
in case b), if the resonance frequency (fᵣₑₛ) is not detected within the previous partial range in which the most recently detected resonance frequency (fᵣₑₛ₋₁) was located, first, a first partial range directly adjacent to the previous partial range is excited and the frequency response is detected, and then, if the resonance frequency (fᵣₑₛ) is not located there, a second partial range adjacent to the previous partial range is excited and the frequency response is detected.

6. The method according to claim 5,
**characterized in that**
in the case that the resonance frequency (fᵣₑₛ) is located in none of the adjacent partial ranges, the process is carried out in accordance with case a).

7. The method according to any one of the preceding claims,
**characterized in that**
the individual partial ranges are each excited with a frequency sweep from an upper end of the partial range to a lower end of the partial range.

8. The method according to any one of the preceding claims,
**characterized in that**
in case a) the partial ranges are run through in the descending order.

9. The method according to claim 4,
**characterized in that**
in case b), if the resonance frequency (fᵣₑₛ) is not detected in the previous partial range in which the most recently detected resonance frequency (fᵣₑₛ₋₁) was located, the upper limit and the lower limit of the partial range are expanded upwards or downwards, respectively, for vibration limit level sensors by 50 Hz in each case, and for impedance limit level sensors by 10 MHz in each case, and in the case that the resonance frequency is not located in the expanded partial range, the process is carried out in accordance with case a).

## Revendications

1. Procédé destiné à faire fonctionner un capteur de niveau limite, dans lequel le capteur de niveau limite, pour déterminer une fréquence de résonance (fᵣₑₛ) d'un système de vibration, excite le système de vibration dans une plage de fréquences entre une fréquence limite inférieure (fₘᵢₙ) et une fréquence limite supérieure (fₘₐₓ), et puis une réponse en fréquence (E) est détectée
**caractérisé par le fait que**
la plage de fréquences est subdivisée en une pluralité de sous-plages (I, II, III, IV,...,n), et
a) lorsque la fréquence de résonance (fᵣₑₛ) est inconnue, le système de vibration est excité séquentiellement respectivement dans des sous-plages successives (I, II, III, IV,..., n) et la réponse en fréquence (E_{I}, E_{II}, E_{III}, E_{IV}, ..., Eₙ) est détectée après chaque sous-plage (I, II, III, IV,..., n),
b) lorsque la fréquence de résonance (fᵣₑₛ) est connue, le système de vibration n'est excité que dans la sous-plage (n) dans laquelle se situe la fréquence de résonance (fᵣₑₛ) et puis la réponse en fréquence (Eₙ) est détectée.

2. Procédé selon la revendication 1, **caractérisé en ce que** la plage de fréquences est subdivisée en quatre sous-plages (I, II, III, IV).

3. Procédé selon la revendication 1, **caractérisé en ce que**, dans le cas a), la plage de fréquences est subdivisée en quatre sous-plages (I, II, III, IV) et, dans le cas b), la sous-plage dans laquelle se situe la fréquence de résonance (fᵣₑₛ) est ajustée dynamiquement.

4. Procédé selon la revendication 3, **caractérisé en ce que**, dans le cas b), pour des capteurs de niveau limite de vibration, la sous-plage est définie de 50 Hz en dessous de la dernière fréquence de résonance détectée (fᵣₑₛ -1) à 50 Hz au-dessus de la dernière fréquence de résonance détectée (fᵣₑₛ -1), et pour des capteurs de niveau limite d'impédance, la sous-plage est définie de 10 MHz en dessous de la dernière fréquence de résonance détectée (fᵣₑₛ -1) à 10 MHz au-dessus de la dernière fréquence de résonance détectée (fᵣₑₛ -1).

5. Procédé selon l'une quelconque des revendications précédentes, **caractérisé en ce que** dans le cas b), si la fréquence de résonance (fᵣₑₛ) n'est pas détectée dans la sous-plage précédente dans laquelle se trouvait la dernière fréquence de résonance (fᵣₑₛ -1) détectée, d'abord une première sous-plage directement contiguë à la sous-plage précédente est excitée et la réponse en fréquence est détectée, et puis, si la fréquence de résonance (fᵣₑₛ) ne se trouve pas dans celle-ci, une deuxième sous-plage contiguë à la sous-plage précédente est excitée et la réponse en fréquence est détectée.

6. Procédé selon la revendication 5, **caractérisé en ce que** dans le cas où la fréquence de résonance (fᵣₑₛ) ne se trouve dans aucune des sous-plages contiguës, on procède selon le cas a).

7. Procédé selon l'une quelconque des revendications précédentes, **caractérisé en ce que** les sous-plages individuelles sont excitées chacune avec un balayage en fréquence d'une extrémité supérieure de la sous-plage à une extrémité inférieure de la sous-plage.

8. Procédé selon l'une quelconque des revendications précédentes, **caractérisé en ce que**, dans le cas a), les sous-plages sont parcourues par ordre décroissant.

9. Procédé selon la revendication 4, **caractérisé en ce que** dans le cas b), si la fréquence de résonance (fᵣₑₛ) n'est pas détectée dans la sous-plage précédente dans laquelle se trouvait la dernière fréquence de résonance (fᵣₑₛ) détectée, la limite supérieure et la limite inférieure de la sous-plage pour des capteurs de niveau limite de vibration est élargie vers le haut ou vers le bas de 50 Hz respectivement et pour des capteurs de niveau limite d'impédance elle est élargie vers le haut ou vers le bas de 10 MHz respectivement, et au cas où la fréquence de résonance ne serait pas dans la sous-plage élargie, on procède selon le cas a).
